# EUROPEAN PATENT SPECIFICATION

(11) **EP 1 936 910 B1**
(45) Date of publication and mention of the grant of the patent: **23.01.2019**
(21) Application number: 06292053.3
(22) Date of filing: 22.12.2006
(51) Int. Cl.: H04L 12/28, H04N 21/258, G06Q 30/06

(54) **SYSTEM FOR MEDIA CONTENT DELIVERY TO A MEDIA DESTINATION DEVICE, A RELATED ASSOCIATION DEVICE AND A RELATED MULTIMEDIA DELIVERY DEVICE**
SYSTEM ZUR BEREITSTELLUNG VON MEDIENINHALTEN AN EINE MEDIENZIELVORRICHTUNG, SOWIE EINE DAMIT ZUSAMMENHÄNGENDE ASSOZIATIONSVORRICHTUNG UND MULTIMEDIENBEREITSTELLUNGSVORRICHTUNG
SYSTÈME DE FOURNITURE DE CONTENUS MÉDIA À UN DISPOSITIF DE DESTINATION MÉDIA, DISPOSITIF D'ASSOCIATION CORRESPONDANT ET DISPOSITIF DE FOURNITURE MULTIMÉDIA ASSOCIÉ

(43) Date of publication of application: 25.06.2008
(73) Proprietor: Alcatel Lucent, 91620 Nozay (FR)
(72) Inventor: Trappeniers, Lieven, 2200 Herentals (Noorderwijk) (BE); Brackx, Michael Frederik François Albert, 9000 Gent (BE); Lou, Zhe, 2000 Antwerp (BE); Van Broeck, Sigurd, 2980 Zoersel (BE); Godon, Marc Bruno Frieda, 1840 Londerzeel (BE); Criel, Johan Georges Prosper, 9000 Gent (BE)
(74) Representative: Nokia EPO representatives

(56) References cited:
- WO-A-2005/017794
- US-A1- 2002 170 961
- US-B1- 6 912 398
- Christoph Seidler: "RFID Opportunities for mobile telecommunication services", , 1 May 2005 (2005-05-01), XP055141222, Retrieved from the Internet: URL:http://www.itu.int/ITU-T/techwatch/rfi d.pdf [retrieved on 2014-09-18]

## Description

The present invention relates to a System for media content delivery to a media destination device, a related Input reception device and a related multimedia delivery device.

Such system for media content delivery to a media destination device is well known in the art. Such a system usually comprises an input reception device for receiving an input, where this input is used for selecting media at a media delivery system. Such a system usually comprises a plurality of media destination devices where each of such media destination devices comprises a single input reception device or is coupled to a single input reception device.

Each media destination device may comprise a local media delivery device or be coupled to a remote media delivery device via at least one communications network. The media destined for a certain media destination device is selected based on an input received at the input reception device and forwarded from the input receiving device to the media delivery device that in response provisions the media selected based on the received input to the media destination device.

Due to the direct coupling of the input reception device to the destination device selected media will be provisioned to the requesting destination device.

*US patent* US6912398 *discloses A time*/*location information delivery system that provides focused advertising and*/*or other information to individuals based on the time and their location. A wireless identification device is carried by an individual and can be read from or written to when the individual passes by interrogators in a specific geographic location. The detectors read ID information embedded in the wireless identification device. A computer uses the ID and location information to select, from a list of information providers, those information providers which provide information content identifiable or correlated to a location and*/*or time, and is of interest to the individual. The information content can be forwarded to the individual by a variety of information channels*

*Further, technical paper* authored by Christoph Seidler, entitled "RFID Opportunities for mobile telecommunication services"(2005-05-01), XP055141222, URL:htt://www.itu.int/ITU-T/techwatch/rfid.df, discloses: "The *technology for radio frequency identification enables data to be transmitted by a tiny portable device, called a tag, which is read by an RFID reader and processed according to the needs of a particular application. This paper focuses on the application of RFID technology in mobile telecommunication services.* Hence it is disadvantageous of such a system for media content delivery to a media destination, in that in such a system the media content delivery is inflexible.

Patent publication WO 2005/017794 A (PRIME KING INVEST LTD [CN]; MEBRUER ROBERT [CN]; OMNI MARKETING GROUP) (2005-02-24) discloses delivering an advertisement to a user's mobile terminal when an RFID tag of a user is identified by an RFID reader.

Patent publication US 2002/170961 A1 (DICKSON BRUCE [US] ET AL) (2002-11-21) discloses a shopping cart scanning item information of products placed in said shopping cart and forwarding said item information to a central processing system. Based on the item information, the central processing system returns further information which is supposed to aid the customer in the shopping process. This further information is delivered, by the shopping cart, to a user's PDA.

### Summary of the invention

It is an object of the present invention to provide with a system for media content delivery to a media destination that is more flexible.

According to the invention, this object is achieved by the system for media content delivery to a media destination according to claim 1, the association device according to claim 3, and a media delivery device according to claim 4.

Indeed, this object is achieved due to the fact that the system for media content delivery comprises means for associating an input reception device with at least one media destination device of a plurality of media destination devices. In this way, by associating an input reception device with at least one destination devices, the media selected through the input receiving device can be provisioned to each device of the at least one destination devices that is associated with the input device. The system according to the invention further is advantageous in that the input reception device can be flexibly coupled to one or more destination devices being remotely located from the input reception device.

Further aspects of the invention are set out in the dependent claims.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.
The above and other objects and features of the invention will become more apparent and the invention itself will be best understood by referring to the following description of an embodiment taken in conjunction with the accompanying drawings wherein:

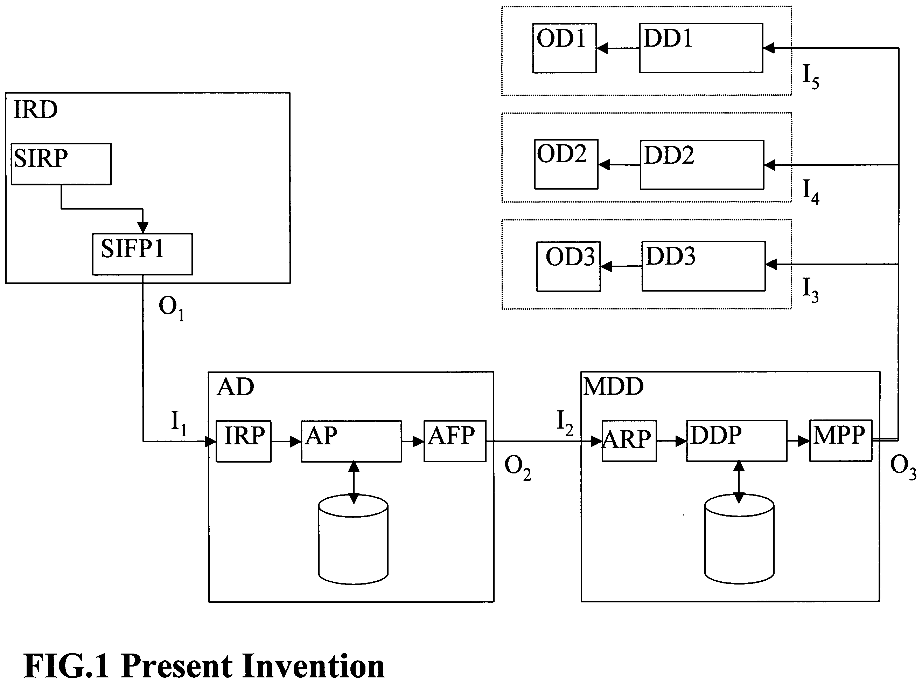

- FIG.1 . represents the functional representation of a system for media content delivery to a media destination device according to the present invention.

### Detailed description of the invention

In the following paragraphs, referring to the drawing in FIG.1, an implementation of the system for media content delivery to a media destination device is described. In the second paragraph, all connections between mentioned elements are defined. Subsequently all relevant functional means of the mentioned system as presented in FIG.1 are described followed by a description of all interconnections. In the succeeding paragraph the actual execution of the system for media content delivery to a media destination device is described.

The system for media content delivery according our present invention comprises an input reception device IRD for receiving an input for selecting media from a media delivery device MDD. This input reception device IRD may be included in a user terminal like a mobile phone. The input reception device IRD may be a tag reader such as a barcode reader or an RFID reader for reading RFID tags coupled to a certain object. The input reception device alternatively could be an Infrared Receiver or a keyboard. The input reception device may for instance be included in a mobile phone, an IPTV set-top box, or a networked Television set.

Although usually there is a plurality of such devices, in this embodiment for reasons of simplicity only one input reception device is described.

More input reception devices per user is possible

The system further comprises the media delivery device MDD for holding media content and additional provisioning this media content to at least one destination device in response to an input that is received by the input receiving device and subsequently is forwarded to the media delivery device. This media delivery device MDD here is supposed to be a central device able to delivering media content to each of a destination device of a plurality of destination devices (DD1, DD2, DD3). Such a media delivery device may be a media delivery platform in an IPTV network. This may alternatively be an Audio/Video streaming server or a web server.

The system further comprises a plurality of destination devices (DD1, DD2, DD3) for receiving media content and presenting the media content via a corresponding output device (OD1, OD2, OD3) to a subscriber or user associated with the destination device. Such a destination device may be an IPTV set-top box of an IPTV network, with the associated output device being a Television screen. This destination device may alternatively be a mobile phone including the destination device and the corresponding output device. The destination device may alternatively be a mobile phone including the destination device and the corresponding output device and the input reception device IRD. The destination device can be a consumer electronics device in the home that receives, decodes or transcodes the media signal and sends the resulting media signal to a networked output device in the home (for example a networked television or a networked photo-frame). In an alternative embodiment, the destination device and the corresponding output device is a public display.

In another alternative embodiment, the output device is on a tag, for example the tag whose signal triggered the input reception device IRD and media delivery device MDD. In this case, the associated destination device DD can either be included in the same tag that includes the output device or either included in the tag reader that acts as the input reception device.

In another alternative embodiment, the output device and/or the associated destination device DD is included in the input reception device IRD.

Finally the system comprises an associating device AD that is adapted to associate the input reception device IRD with the least one media destination device DD1 of a plurality of media destination devices DD1, DD2, DD3. This associating device AD may be (part of) a consumer electronics device in the home like a service gateway. Alternatively, the associating device may be included in an IPTV set-top box, a networked Television set, a mobile phone or a server in the network.

The input reception device IRD is coupled with the associating device AD by means of an Internet protocol link or a Universal Serial Bus (USB) or an electronic bus inside a terminal or a wireless fidelity (WiFi, WLAN) link or an Infrared Link or a Global System for Mobile communication (GSM) link or a GPRS or UMTS link. The associating device AD is in turn coupled to the central media delivery device MDD over an Internet protocol link or a Universal Serial Bus (USB) or an electronic bus inside a terminal or a wireless fidelity (WiFi, WLAN) link or an Infrared Link or a Global System for Mobile communication (GSM) link or a GPRS or UMTS link. The media delivery device MDD is coupled over an Internet protocol link or a Universal Serial Bus (USB) or an electronic bus inside a terminal or a wireless fidelity (WiFi, WLAN) link or an Infrared Link or a Global System for Mobile communication (GSM) link or a GPRS or UMTS link to any of the destination devices DD1, DD2, DD3.

The digital information sent from the object token to the STB and to the multimedia delivery platform can be an ID, a code, a URL or URI, an IP address or a DRM certificate for the content.

The input receiving device IRD comprises a selection input reception part SIRP adapted to receive an input, in case of a RFID reader, able to read an RFID tag coupled to an object and a input forwarding part SIFP that is adapted to forward the input, i.e. the RFID tag, to an associating device AD. The selection input reception part SIRP being coupled to the selection input forwarding part SIFP. The selection input forwarding part has an output that is at the same time am output O₁ of the input reception device IRD

The association device AD comprises an input reception part IRP adapted to receive an input for selecting media content from said input reception part IRP and an association part AP that is adapted to associate the input reception device IRD with at least one media destination device DD1 of a plurality of media destination devices DD1, DD2, DD3. The association device AD further comprises an association forwarding part AFP that is adapted to forward the association of said input reception device IRD with the at least one media destination device DD1 towards a media delivery device MDD for provisioning the media to each of said at least one media destination device DD1 by a media provisioning part MPP of the media delivery device MDD.

The input reception part IRP has an input-terminal that is at the same time an input-terminal I₁ of the association device AD. The input reception part IRP further is coupled with the association part AP that is coupled to the association forwarding part AFP. The association forwarding part AFP has an output-terminal that is at the same time an output-terminal O₂ of the association device AD.

The Media delivery device MDD, comprises an association reception part ARP adapted to receive an association of the input reception device IRD with said at least one media destination device DD1 of a plurality of media destination devices DD1, DD2, DD3 and further comprises a destination determination part DDP that is adapted to determine the at least one destination device DD1 of the plurality of destinations devices DD1, DD2, DD3 from an association of the input reception device IRD with the at least one media destination device DD1 of a plurality of media destination devices DD1, DD2, DD3 for provisioning the media content to the at least one destination device DD1. Media delivery device MDD further comprises a media provisioning part MPP that is adapted to provision the selected media to each of the at least one media destination device DD1.

The association reception part ARP has an input-terminal that is at the same time an input-terminal of the media delivery device MDD. The association reception part ARP further is coupled to the destination determination part DDP that in turn is coupled to the media provisioning part MPP. The Media provisioning part has an output-terminal that is at the same time an output-terminal O₃ of the media delivery device MDD.

The media destination devices DD1, DD2, DD3 each are a set-top box at an IPTV subscribers premises. Alternatively this media destination device may be (included in) a networked Television set, or a mobile phone.

The connected output devices each may be a TV screen. Alternatively this may be the LCD display of a personal computer.

Each of the destination devices DD1, DD2, DD3 are coupled to a respective output device OD1, OD2, OD3.

In order to explain the execution of the present invention it is supposed that a subscriber the husband of the IPTV system with his mobile phone including a input reception device, e.g. the RFID reader moves to a remote location e.g. a shop. There he encounters a product he is interested in. In order to discus the product with his wife he touches with the input reception device IRD e.g. the RFID-reader at, his mobile phone the tag e.g. RFID-tag attached to the product. The RFID-tag together with the identification of the input reception device IRD, e.g. the phone identification is forwarded by the information forwarding part IFD to the association device AD. The information reception part IRP then receives the information received by the information reception device IRD e.g. the RFID tag together with the identification of the input reception device IRD. The identification of the input reception device IRD is looked up in the association part AP of the association device in table containing the input reception device identification on one hand and the associated destination device(s) on the other hand. The table contains the identification of input reception device IRD and identification of the associated destination devices e.g. DD1 at user premises in living room. The association forwarding part AFP sends the identifications of the associated device(s) towards the media delivery device MDD. The association reception part ARP receives the identifications of the associated device(s). The destination determination part DDP subsequently determines the destination, DD1 in this case, together with the media content identified through the received RFID tag. In one embodiment, the association part AP or the destination determination part DDP will, additionally, apply pre-defined policies to the association in the association part AP. An example of such a policy could describe the appropriateness of events from this input reception device IRD triggering the delivery of media to the destination, DD1 in this case. For example, the wife could have created (an entry in) a policy such that the husband's mobile phone can only act as an initiating input reception device IRD when it is in the home. The RFID tag determines the media content related to the product attached to the RFID-tag e.g. a short demonstration movie. The media provisioning part MPP then forwards the demonstration movie or an identifying reference towards destination device DD1 that subsequently is enabled to present the movie to the other members of the family. Through this presentation of the demonstration movie the discussion over the (mobile) phone is supported.

Here it is shown that the present invention allows various scenarios wherein a (remote) input reception device is can be associated to any destination device allowing to present selected media content at different client devices.

It is possible to associate an input reception device to at least one destination device.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims

## Claims

1. System for media content delivery to a media destination device (DD1) of a plurality of remote media destinations devices (DD1, DD2, DD3) included in said system, said system further comprising an input reception device (IRD), adapted to receive an input for selecting said media content, said input identifying said media content, said system comprising a media delivery device (MDD) adapted to select said media content based on said input of said input reception device (IRD), said media delivery device (MDD) being coupled to each remote media destination device (DD1) of said plurality of remote media destinations devices (DD1, DD2, DD3), wherein said system further comprises:
a. an associating device (AD), being coupled between said input reception device (IRD) and said media delivery device (MDD) and adapted to receive said input identifying said media content at an input reception part (IRP) of the associating device (AD), and to associate said input reception device (IRD) with at least one remote media destination device (DD1) of said plurality of remote media destination devices (DD1, DD2, DD3) based on an identification of said input reception device (IRD) and wherein said association device (AD) further comprises an association forwarding part (AFP), adapted to forward said association of said input reception device (IRD) with said at least one remote media destination device (DD1) and said input identifying said media content towards said media delivery device (MDD) for provisioning said media content to each of said at least one remote media destination device (DD1) by a media provisioning part (MPP) of said media delivery device (MDD).

2. System for media content delivery according to claim 1 wherein said remote media delivery device (MDD), further is adapted to deliver said media content to said at least one remote media destination device (DD1) based on the association of said input reception device and said at least one remote media destination device (DD1).

3. Association device (AD) for use in a system according to claim 1 or 2, wherein said association device (AD) comprises an association part (AP), adapted to associate said input reception device (IRD) with at least one remote media destination device (DD1) of a plurality of remote media destination devices (DD1, DD2, DD3) based on an identification of said input reception device and wherein said association device (AD) further comprises an association forwarding part (AFP), adapted to forward said association of said input reception device (IRD) with said at least one remote media destination device (DD1) and said input identifying said media content towards said media delivery device (MDD) for provisioning said media content to each of said at least one remote media destination device (DD1) by said media provisioning part (MPP) of the media delivery device (MDD) and wherein said
association device (AD) comprises an input reception part (IRP) adapted to receive an input for selecting said media content, said input identifying said media content, from said input reception part (IRP).

4. Media delivery device (MDD), for use in a system according to claim 1 or 2, wherein said media delivery device (MDD) comprises a destination determination part (DDP), adapted to determine said at least one remote destination device (DD1) of said plurality of remote destinations devices (DD1, DD2, DD3) from an association of said input reception device with said at least one remote media destination device (DD1) of a plurality of remote media destination devices (DD1, DD2, DD3) for provisioning said media content to said at least one remote media destination device (DD1) and wherein said media delivery device (MDD) further comprises an association reception part (ARP), adapted to receive said association of said input reception device (IRD) with said at least one remote media destination device (DD1) and the input identifying said media content from said association device (AD).

5. Media delivery device (MDD) according to claim 4, wherein **said** media delivery device (MDD) further comprises a media provisioning part (MPP), adapted to provision said media content to each of said at least one remote media destination device (DD1).

## Patentansprüche

1. System zur Medieninhaltsbereitstellung an eine Medienzielvorrichtung (DD1) einer Vielzahl von entfernten Medienzielvorrichtungen (DD1, DD2, DD3), die in dem System enthalten sind, wobei das System ferner eine Eingabeempfangsvorrichtung (IRD) beinhaltet, die dazu ausgebildet ist, eine Eingabe zum Auswählen des Medieninhalts zu empfangen, wobei die besagte Eingabe den besagten Medieninhalt identifiziert, wobei das besagte System eine Medienbereitstellungsvorrichtung (MDD) umfasst, die dazu ausgebildet ist, den besagten Medieninhalt aufbauend auf der Eingabe der besagten Eingabeempfangsvorrichtung (IRD) auszuwählen, wobei die besagte Medienbereitstellungsvorrichtung (MDD) an jede Medienzielvorrichtung (DD1) der besagten Vielzahl entfernter Medienzielvorrichtungen (DD1, DD2, DD3) gekoppelt ist, wobei das besagte System ferner umfasst:
a. eine Zuordnungsvorrichtung (AD), die zwischen der besagten Eingabeempfangsvorrichtung (IRD) und der besagten Medienbereitstellungsvorrichtung (MDD) gekoppelt ist und dazu ausgebildet ist, die besagte Eingabe, die den besagten Medieninhalt identifiziert, an einem Eingabeempfangsteil (IRP) der Zuordnungsvorrichtung (AD) zu empfangen und die besagte Eingabeempfangsvorrichtung (IRD) aufbauend auf einer Identifikation der besagten Eingabeempfangsvorrichtung (IRD) mindestens einer entfernten Medienzielvorrichtung (DD1) der besagten Vielzahl von entfernten Medienzielvorrichtungen (DD1, DD2, DD3) zuzuordnen, und wobei die besagte Zuordnungsvorrichtung (AD) ferner einen Zuordnungsweiterleitungsteil (AFP) umfasst, der dazu ausgebildet ist, die besagte Zuordnung der besagten Eingabeempfangsvorrichtung (IRD) zu der besagten mindestens einen entfernten Medienzielvorrichtung (DD1) weiterzuleiten, und die besagte Eingabe den besagten Medieninhalt zu der Medienbereitstellungsvorrichtung (MDD) identifiziert, um den besagten Medieninhalt durch einen Medienbereitstellungsteil (MPP) der Medienbereitstellungsvorrichtung (MDD) an jede der besagten mindestens einen entfernten Medienzielvorrichtung (DD1) bereitzustellen.

2. System zur Medieninhaltsbereitstellung nach Anspruch 1, wobei die besagte entfernte Medienbereitstellungsvorrichtung (MDD) ferner dazu ausgebildet ist, den besagten Medieninhalt aufbauend auf der Zuordnung der besagten Eingabeempfangsvorrichtung und der besagten mindestens einen entfernten Medienzielvorrichtung (DD1) an die besagte mindestens eine entfernte Medienzielvorrichtung (DD1) bereitzustellen.

3. Zuordnungsvorrichtung (AD) zur Verwendung in einem System nach Anspruch 1 oder 2, wobei die besagte Zuordnungsvorrichtung (AD) einen Zuordnungsteil (AP) umfasst, der ausgebildet ist, um die besagte Eingabeempfangsvorrichtung (IRD) aufbauend auf einer Identifikation der besagten Eingabeempfangsvorrichtung mindestens einer entfernten Medienzielvorrichtung (DD1) einer Vielzahl von entfernten Medienzielvorrichtungen (DD1, DD2, DD3) zuzuordnen, und wobei die besagte Zuordnungsvorrichtung (AD) ferner einen Zuordnungsweiterleitungsteil (AFP) umfasst, der dazu ausgebildet ist, die besagte Zuordnung der besagten Eingabeempfangsvorrichtung (IRD) zu der besagten mindestens einen entfernten Medienzielvorrichtung (DD1) weiterzuleiten, und die besagte Eingabe den besagten Medieninhalt zu der besagten Medienbereitstellungsvorrichtung (MDD) identifiziert, um den besagten Medieninhalt durch den besagten Medienbereitstellungsteil (MPP) der Medienbereitstellungsvorrichtung (MDD) an jede der besagten mindestens einen entfernten Medienzielvorrichtung (DD1) bereitzustellen, und wobei die besagte Zuordnungsvorrichtung (AD) einen Eingabeempfangsteil (IRP) umfasst, der dazu ausgebildet ist, eine Eingabe zum Auswählen des besagten Medieninhalts von dem besagten Eingabeempfangsteil (IRP) zu empfangen, wobei die besagte Eingabe den besagten Medieninhalt identifiziert.

4. Medienbereitstellungsvorrichtung (MDD) zur Verwendung in einem System nach Anspruch 1 oder 2, wobei die besagte Medienbereitstellungsvorrichtung (MDD) einen Zielbestimmungsteil (DDP) umfasst, der dazu ausgebildet ist, die besagte mindestens eine entfernte Zielvorrichtung (DD1) der besagten Vielzahl von entfernten Zielvorrichtungen (DD1, DD2, DD3) aus einer Zuordnung der besagten Eingabeempfangsvorrichtung zu der besagten mindestens einen entfernten Medienzielvorrichtung (DD1) einer Vielzahl von entfernten Medienzielvorrichtungen (DD1, DD2, DD3) zu bestimmen, um den besagte Medieninhalt an die besagte mindestens eine entfernte Medienzielvorrichtung (DD1) bereitzustellen, und wobei die besagte Medienbereitstellungsvorrichtung (MDD) ferner einen Zuordnungsempfangsteil (ARP) umfasst, der dazu ausgebildet ist, die besagte Zuordnung der besagten Eingabeempfangsvorrichtung (IRD) zu der besagten mindestens einen entfernten Medienzielvorrichtung (DD1) zu empfangen, und die Eingabe den besagten Medieninhalt von der besagten Zuordnungsvorrichtung (AD) identifiziert.

5. Medienbereitstellungsvorrichtung (MDD) nach Anspruch 4, wobei die besagte Medienbereitstellungsvorrichtung (MDD) ferner einen Medienbereitstellungsteil (MPP) umfasst, der dazu ausgebildet ist, den besagten Medieninhalt an jede der besagten mindestens einen entfernten Medienzielvorrichtung (DD1) bereitzustellen.

## Revendications

1. Système de distribution de contenu multimédia à un dispositif destinataire multimédia (DD1) parmi une pluralité de dispositifs destinataires multimédia distants (DD1, DD2, DD3) inclus dans ledit système, ledit système comprenant en outre un dispositif de réception d'entrée (IRD), adapté pour recevoir une entrée pour sélectionner ledit contenu multimédia, ladite entrée identifiant ledit contenu multimédia, ledit système comprenant un dispositif de distribution multimédia (MDD) adapté pour sélectionner ledit contenu multimédia sur la base de ladite entrée dudit dispositif de réception d'entrée (IRD), ledit dispositif de distribution multimédia (MDD) étant couplé à chaque dispositif destinataire multimédia distant (DD1) parmi ladite pluralité de dispositifs destinataires multimédia distants (DD1, DD2, DD3), ledit système comprenant en outre :
a. un dispositif d'association (AD), couplé entre ledit dispositif de réception d'entrée (IRD) et ledit dispositif de distribution multimédia (MDD) et adapté pour recevoir ladite entrée identifiant ledit contenu multimédia au niveau d'une partie de réception d'entrée (IRP) du dispositif d'association (AD), et pour associer ledit dispositif de réception d'entrée (IRD) à au moins un dispositif destinataire multimédia distant (DD1) parmi ladite pluralité de dispositifs destinataires multimédia distants (DD1, DD2, DD3) sur la base d'une identification dudit dispositif de réception d'entrée (IRD) et ledit dispositif d'association (AD) comprenant en outre une partie de transfert d'association (AFP), adaptée pour transférer ladite association dudit dispositif de réception d'entrée (IRD) avec ledit au moins un dispositif destinataire multimédia distant (DD1) et ladite entrée identifiant ledit contenu multimédia vers ledit dispositif de distribution multimédia (MDD) pour fournir ledit contenu multimédia à chacun parmi ledit au moins un dispositif destinataire multimédia distant (DD1) au moyen d'une partie de fourniture multimédia (MPP) dudit dispositif de distribution multimédia (MDD).

2. Système de distribution de contenu multimédia selon la revendication 1 dans lequel ledit dispositif de distribution multimédia distant (MDD) est en outre adapté pour distribuer ledit contenu multimédia audit au moins un dispositif destinataire multimédia distant (DD1) sur la base de l'association dudit dispositif de réception d'entrée et dudit au moins un dispositif destinataire multimédia distant (DD1).

3. Dispositif d'association (AD) à utiliser dans un système selon la revendication 1 ou 2, ledit dispositif d'association (AD) comprenant une partie d'association (AP), adaptée pour associer ledit dispositif de réception d'entrée (IRD) à au moins un dispositif destinataire multimédia distant (DD1) parmi une pluralité de dispositifs destinataires multimédia distants (DD1, DD2, DD3) sur la base d'une identification dudit dispositif de réception d'entrée et ledit dispositif d'association (AD) comprenant en outre une partie de transfert d'association (AFP), adaptée pour transférer ladite association dudit dispositif de réception d'entrée (IRD) avec ledit au moins un dispositif destinataire multimédia distant (DD1) et ladite entrée identifiant ledit contenu multimédia vers ledit dispositif de distribution multimédia (MDD) pour fournir ledit contenu multimédia à chacun parmi ledit au moins un dispositif destinataire multimédia distant (DD1) au moyen de ladite partie de fourniture multimédia (MPP) du dispositif de distribution multimédia (MDD) et ledit dispositif d'association (AD) comprenant une partie de réception d'entrée (IRP) adaptée pour recevoir une entrée pour sélectionner ledit contenu multimédia, ladite entrée identifiant ledit contenu multimédia, à partir de ladite partie de réception d'entrée (IRP).

4. Dispositif de distribution multimédia (MDD), à utiliser dans un système selon la revendication 1 ou 2, dans lequel ledit dispositif de distribution multimédia (MDD) comprend une partie de détermination de destination (DDP), adaptée pour déterminer ledit au moins un dispositif de destination distant (DD1) parmi ladite pluralité de dispositifs destinataires distants (DD1, DD2, DD3) à partir d'une association dudit dispositif de réception d'entrée avec ledit au moins un dispositif destinataire multimédia distant (DD1) parmi une pluralité de dispositifs destinataires multimédia distants (DD1, DD2, DD3) pour fournir ledit contenu multimédia audit au moins un dispositif destinataire multimédia distant (DD1) et ledit dispositif de distribution multimédia (MDD) comprenant en outre une partie de réception d'association (ARP), adaptée pour recevoir ladite association dudit dispositif de réception d'entrée (IRD) avec ledit au moins un dispositif destinataire multimédia distant (DD1) et l'entrée identifiant ledit contenu multimédia à partir dudit dispositif d'association (AD).

5. Dispositif de distribution multimédia (MDD) selon la revendication 4, dans lequel **ledit** dispositif de distribution multimédia (MDD) comprend en outre une partie de fourniture multimédia (MPP), adaptée pour fournir ledit contenu multimédia à chacun parmi ledit au moins un dispositif destinataire multimédia distant (DD1).
